# EUROPEAN PATENT APPLICATION

(11) **EP 1 679 339 A1**
(43) Date of publication of application: **12.07.2006**
(21) Application number: 04793222.3
(22) Date of filing: 29.10.2004
(51) Int. Cl.: C08J 9/04, C08J 3/24, C08L 23/16

(54) **RESIN COMPOSITION FOR FOAM MOLDING, FOAM, AND PROCESS FOR PRODUCING FOAM**

(30) Priority: 31.10.2003 JP 2003373756; 19.08.2004 JP 2004239934
(71) Applicant: NHK SPRING CO., LTD., Yokohama-shi, Kanagawa 236-0004 (JP)
(72) Inventor: KUSAKAWA, Koichi, c/o NHK SPRING CO., LTD., Yokohama-shi, Kanagawa 236-0004 (JP); ICHIMURA, Shigeki, c/o NHK SPRING CO., LTD., Yokohama-shi, Kanagawa 236-0004 (JP); MAEDA, Yuji, c/o NHK SPRING CO., LTD., Yokohama-shi, Kanagawa 236-0004 (JP)
(74) Representative: HOFFMANN EITLE
(86) International application number: PCT/JP2004/016114
(87) International publication number: WO 2005/042626

(57) **Abstract**

A resin composition for a foam is composed of a branched rubbery olefin based soft resin (C) where its gel fraction (a weight percentage of an insoluble content after extraction with xylene boiled at 138°C for 3 hours) is less than 5%, and a volume ratio of a component which exhibits a mobility of less than 400 microseconds at a T₂ (spin-spin relaxation) time by proton (H⁺) pulse nuclear magnetic resonance is 55 to 95%, obtained by kneading and reacting to thicken an organic peroxide crosslinking type olefin based copolymer rubber (A) and an organic peroxide decomposing type crystalline olefin resin (B). By the use of this resin composition, it is possible to provide foamed articles which can be used for interior parts for automobiles, have high to low foaming magnifications and a recycling property, and are soft and excellent in cushion property, thermal insulating property and in-mold foam molding property.

## Description

### TECHNICAL FIELD

The present invention relates to a resin composition for foam molding, a foam and a method for producing the foam. Particularly, the present invention relates to a resin composition capable of obtaining a foam molded body which is usable for interior parts for automobiles, has a highly flexible foaming magnification from low to high foaming, and is soft and excellent in cushion property, thermal insulating property and recycling efficiency, a foam obtained by using the resin composition, and a method for producing the foam.

### BACKGROUND ART

Conventionally, as a foam material which has a high foaming magnification, is excellent in fabrication in molds and has soft feeling and cushion property in foam molding in molds, there has been urethane foam. Because of being thermosetting resin, the urethane foam is utilized as chip foam in terms of material recycling, but has many problems for recycling as a foam raw material and is the material with low recycling potential.

Thermoplastic olefin based elastomer has been widely used as the material with good recycling property, and foams thereof have also been approached (Patent document 1). In this conventional art, "a method for producing a thermoplastic elastomer foam characterized by obtaining a mixture of 90 to 50 parts by weight of a peroxide crosslinking type olefin based copolymer rubber (a), 10 to 50 parts by weight of a peroxide decomposing type olefin based plastic (b) [where, (a) + (b) is 100 parts by weight], 5 to 50 parts by weight of a peroxide non-crosslinking type rubber-like substance (c) and/or a mineral oil based softener, dynamically treating this mixture with heat in the presence of an organic peroxide to yield a foam composition composed of a slightly crosslinked rubber composition (A) and a decomposing type foaming agent (B), and obtaining a molded article by heating and melting this foam composition followed by foaming" has been disclosed.

However, in the technology disclosed in this Patent Document 1, the foaming magnification in the obtained foam is extremely low and the foam can not come into practical use as disclosed in its Example. This was also confirmed by check experiments by the present inventors.

In order to improve the problems in the technology disclosed in the above Patent Document 1, a method for forming a cushion layer (foam molded body) of an interior surface material excellent in recycling property by combining a particular olefin resin in a small amount with a partially crosslinked olefin based thermoplastic elastomer has been proposed (Patent Document 2). Additionally, a method for forming a cushion layer (foam molded body) of an interior surface material excellent in recycling property by combining a particular styrene based thermoplastic elastomer in a small amount with a similarly partially crosslinked olefin based thermoplastic elastomer has been also proposed (Patent Document 3).

However, the foaming magnification by extrusion foaming is 2.9 times at a maximum in the former technology, and the foaming magnification by injection foaming is 2.5 times at a maximum in the latter technology. Both foaming magnifications are low. Thus, no product which satisfies the feel and the cushion property has been obtained.

Conventionally, as a procedure to enhance the soft cushion property, the method of foaming effectively by giving crosslinking to an olefin based thermoplastic elastomer based material using a crosslinking agent (increasing a gel fraction) to increase a fluid viscosity has been known (Patent Documents 1 and 2).

The study by the present inventors has revealed that the technologies disclosed in these Patent Documents 1 and 2 contribute to enhancement of rubber elasticity of the resin itself but have various problems for foaming. That is, the present inventors have found that in the technologies disclosed in Patent Documents 1 and 2, (i) it is necessary that a foaming agent is dispersed, dissolved and has been dissolved in a base material before foam molding, thus, when a crosslinking density (gel fraction) of the base material is high, the foaming agent can not been uniformly dispersed, dissolved and has not been uniformly dissolved in the base material, thereby (ii) the combined foaming agent can not effectively contribute to foaming, and (iii) consequently, the foaming magnification is not increased. The present inventors have known from the study that in the technologies disclosed in these references, (iv) because of the high viscosity, shearing to the base resin becomes remarkable, a microaggregation structure in the base material is changed and simultaneously the base resin is decomposed by the shearing when the foaming agent is dispersed, thereby (v) leading to excessive reduction of the fluid viscosity, and thus it becomes unstable to effectively foam in molds and dies and control a molded shape.

As mentioned above, it is an actual circumstance that conventional proposals have not provide yet an in-mold foam molded article which is excellent in recycling property and in-mold fabrication, has high foaming magnification of the cushion layer and soft cushion property excellent in texture.

Patent Document 1: Japanese Patent Application Laid-Open No. 54-112967
Patent Document 2: Japanese Patent Application Laid-Open No. 9-143297
Patent Document 3: Japanese Patent Application Laid-Open No. 14-206034

### DISCLOSURE OF INVENTION

### PROBLEM TO BE SOLVED BY THE INVENTION

The present invention has been made in the light of the above circumstance, and an aim is to provide a resin composition capable of obtaining a foam which is usable for interior parts for automobiles, having a high foaming magnification, soft and excellent in cushion property and thermal insulating property, a foam obtained by using the resin composition and a method for producing the foam.

### MEANS FOR SOLVING PROBLEM

As a result of an extensive study for solving the above problems, the present inventors have confirmed that the desired foam can be obtained by using an olefin based thermoplastic elastomer composition having particular physical properties described below as a resin composition for foam molding.

As described above, the present inventors have elucidated that the insufficient foaming magnification in the conventional foams is primarily caused by the viscosity out of the proper range in the resin composition for foam molding. It was investigated which viscosity range was proper and what physical property could be specified as an indicator for specifying the proper viscosity range. As a result of various experiments, the present inventors have confirmed that the resin composition having the suitable viscosity range, i.e., having the high foaming magnification can be obtained by specifying "a newly defined gel fraction" and/or "a volume ratio of a component which exhibits a mobility of 400 microseconds or more at a T₂ (spin-spin relaxation) time by proton (H⁺) pulse nuclear magnetic resonance and a volume ratio of a component of less than 400 microseconds at the same T₂ time" in a predetermined range as physical property values of the resin composition.

### (Olefin based thermoplastic elastomer composition for foam molding)

The resin composition specified by the present inventors based on the above findings is an olefin based thermoplastic elastomer capable of obtaining a foam which can have the high foaming magnification, and is soft and excellent in cushion property and thermal insulating property. This olefin based thermoplastic elastomer is a branched rubber-like olefin based soft resin (C) which is composed of an organic peroxide crosslinking type olefin based copolymer rubber (A) and an organic peroxide decomposing type crystalline olefin resin (B), obtained by thickening by a kneading reaction of these rubber (A) and resin (B), and characterized in that its gel fraction (weight percentage of an insoluble content after being extracted with xylene boiled at 138°C for 3 hours) is less than 5%.

Alternatively, this olefin based thermoplastic elastomer is characterized in that the volume ratio of the component which exhibits the mobility of 400 microseconds or more at the T₂ (spin-spin relaxation) time by proton (H⁺) pulse nuclear magnetic resonance is 55 to 95% and the volume ratio of the component which exhibits the mobility of less than 400 microseconds at the same T₂ time is 5 to 45%.

In the present invention, "the gel fraction and the mobility bounding 400 microseconds at the T₂ time by the proton pulse nuclear magnetic resonance, which have been specified as the physical properties which contribute to enhancing the foamability" will be described in more detail after describing the components of the resin composition of the present invention below.

### (Organic peroxide crosslinking type olefin based copolymer rubber (A))

The organic peroxide crosslinking type olefin based copolymer rubber (A) used in the present invention is an amorphous random elastic copolymer containing α-olefin having 2 to 20 carbon atoms at 50 mol% or more or an elastic copolymer having a crystallinity of 50% or less, and non-conjugated diene copolymer with non-crystalline α-olefin composed of two types or more of α-olefin, or two types or more of α-olefin.

Specific examples of such an olefin based copolymer rubber include the following rubbers.
(a) Ethylene α-olefin copolymer rubber [ethylene/α-olefin (molar ratio) = about 90/10 to 50/50]
(b) Ethylene α-olefin non-conjugated diene copolymer rubber [ethylene/α-olefin (molar ratio) = about 90/10 to 50/50]
(c) Propylene α-olefin copolymer rubber [propylene/α-olefin (molar ratio) = about 90/10 to 50/50]
(d) Butene α-olefin copolymer rubber [butene/α-olefin (molar ratio) = about 90/10 to 50/50]

Specific examples of the above α-olefin may include ethylene, propylene, 1-butene, 1-pentene, 4-methyl-1-pentene, 1-hexene, 1-octene, 1-nonene, 1-decene, 1-undecene, 1-dodecene, 1-tridecene, 1-tetradecene, 1-pantadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and combinations thereof.

Specific examples of the above non-conjugated diene may include dicyclopentadiene, 1,4-hexadiene, cyclooctadiene, methylene norbornene and ethylidene norbornene.

Mooney viscosity [ML 1.4 (100°C)] of these copolymers is 10 to 250, and in particular preferably 40 to 150.

It is preferable that the above (b) ethylene α-olefin non-conjugated diene copolymer rubber has an iodine value of 25 or less.

In the mixture of the organic peroxide crosslinking type olefin based copolymer rubber (A) and the organic peroxide decomposing type crystalline olefin resin (B) used in the present invention, a combined amount of the organic peroxide crosslinking type olefin based copolymer rubber (A) is preferably 30 parts by weight or more and less than 100 parts by weight, more preferably 60 parts by weight or more and less than 100 parts by weight and particularly 65 to 95 parts by weight based on total 100 parts by weight of the organic peroxide crosslinking type olefin based copolymer rubber (A) and the organic peroxide decomposing type crystalline olefin resin (B).

### (Organic peroxide decomposing type crystalline olefin resin (B))

The organic peroxide decomposing type crystalline olefin resin (B) used in the present invention may include a homopolymer or a copolymer of α-olefin having 2 to 20 carbon atoms.

Specific examples of the above organic peroxide decomposing type crystalline olefin resin (B) may include the following (co)polymers.
(a) Propylene homopolymer
(b) Random copolymer of propylene with 10 mol% or less of other α-olefin
(c) Block copolymer of propylene with 30 mol% or less of other α-olefin
(d) 1-Buten homopolymer
(e) Random copolymer of 1-buten homopolymer with 10 mol% or less of other α-olefin
(f) 4-Methyl-1-pentene homopolymer
(g) Random copolymer of 4-methyl-1-pentene with 20 mol% or less α-olefin

Specific examples of the above α-olefin may include the same α-olefin as the specific examples of α-olefin which configure the olefin copolymer rubber described above.

In "the mixture of the organic peroxide crosslinking type olefin based copolymer rubber (A) and the organic peroxide decomposing type crystalline olefin resin (B)", the combined amount of the organic peroxide decomposing type crystalline olefin resin (B) is preferably less than 70 parts by weight, more preferably less than 40 parts by weight, and in particular preferably 5 to 35 parts by weight based on total 100 parts by weight of the organic peroxide crosslinking type olefin based copolymer rubber (A) and the organic peroxide decomposing type crystalline olefin resin (B).

As a modifying agent for "the mixture of the organic peroxide crosslinking type olefin based copolymer rubber (A) and the organic peroxide decomposing type crystalline olefin resin (B)" described above, styrenebutadiene (isoprene)-styrene block copolymer, polybutadiene rubber, polyisoprene rubber and various hydrogenerated rubber thereof, and isobutylene rubber and chlorinated polyethylene may be added in an amount of 50% by weight or less relative to total 100% by weight of the olefin based synthetic rubber and the crystalline olefin resin.

As a softener for the mixture, a paraffin based, naphthene-based, or aromatic softener, or an ester based plasticizer may be added in an amount of 50% by weight or less relative to total 100% by weight of the organic peroxide decomposing type crystalline olefin resin (B) and the organic peroxide crosslinking type olefin based copolymer rubber (A).

The organic peroxide crosslinking type olefin based copolymer rubber (A) as the above is present mainly in a branched state and the percentage of crosslinked form is low in the unfoamed olefin based thermoplastic elastomer for foam molding composed of the mixture of the organic peroxide crosslinking type olefin based copolymer rubber (A) and the organic peroxide decomposing type crystalline olefin resin (B). Thus, the foaming agent is dispersed, kneaded or dissolved without trouble, and a fluidity and a foamability are not interfered upon injection molding and extrusion molding.

In the present invention, it assures the high foamability that a branching degree and a crosslinking degree are within appropriate ranges. Hereinafter, first it will be described that the branching degree is evaluated by "the newly defined gel fraction". Subsequently, it will be described that this branching degree is evaluated by "the gel fraction and the mobility bounding 400 microseconds at the T₂ time by the proton pulse nuclear magnetic resonance, which have been specified as the physical properties which contribute to enhancing the foamability".

### (Gel fraction)

In the method for measuring the gel fraction conventionally used, cyclohexane is used as a solvent, a compound to be measured is immersed in this solvent for 48 hours at room temperature, and a component insoluble in the solvent is addressed as a gel content. Cyclohexane can dissolve most non-crosslinked EPDM rubbers, but can scarcely dissolve non-crosslinked crystalline polypropylene. When a crosslinked moiety of EPDM rubber is evaluated as the gel content or when non-crosslinked crystalline polypropylene is evaluated as the gel content of pseudo-crosslinking, the conventional measurement method and a value of the gel fraction using cyclohexane as the solvent exhibit the crosslinking in a broad sense including the pseudo-crosslinking and have a meaning as an indicator which represents a mechanical physical property of the base material. However, in the study results by the present inventors, it has been found that large factors which enhance the foamability are chemical crosslinking and branches and the pseudo-crosslinking scarcely contribute thereto. Therefore, it has been found that as the indicator which controls the foamability, the gel fraction measured using cyclohexane as the solvent has no meaning and inappropriate.

In the present invention, as the indicator capable of evaluating "the chemical branch specified as a contributor for enhancing the foamability", the following gel fraction is preferable. This gel fraction is measured as follows. That is, the olefin based thermoplastic elastomer for foam molding is prepared by cutting into 0.5 mm square size, 0.5 g thereof is exactly weighed and wrapped with stainless mesh (#600), this is extracted in boiled xylene (138°C) for 3 hours, the extract is again washed thoroughly with boiled xylene separately prepared, xylene is then replaced with acetone, the extract is dried in an oven at 80°C for 24 hours, a residual in the mesh after the extraction is weighed, a percentage of the weight of the residual after the extraction relative to the initial weight is calculated, and this value is made the gel fraction (%).

In the organic peroxide crosslinking type olefin based copolymer rubber (A) and the organic peroxide decomposing type crystalline olefin resin (B) used in the present invention, the gel fraction is 0% when each of them is measured alone.

Not to interfere with the fluidity and the foamability upon foam molding in the olefin based thermoplastic elastomer for foam molding of the present invention, it is necessary that the percentage of the branches present in the olefin based thermoplastic elastomer is less than 5% as the gel fraction obtained by the extraction with boiled xylene (138°C) for 3 hours.

This gel fraction of less than 5% by weight is particularly preferable because the fluidity is excellent, the foaming magnification is also high and the foam molding in the molds and dies becomes easy. On the contrary, it is necessary that the foaming agent is dispersed, dissolved and has been dissolved in the base material before the foam molding. Thus, if the gel fraction exceeds 5% by weight, i.e., the crosslinking density (gel fraction) in the base material becomes high, then it becomes difficult that foaming agent is uniformly dispersed, dissolved and has been uniformly dissolved in the base material, the foaming magnification is not increased, and the fluidity is poor. Therefore, foam molded shapes in the molds and dies are prone to be remarkably inferior.

To give the branches having such a gel fraction of less than 5% by weight, the organic peroxide crosslinking type olefin based copolymer rubber and the organic peroxide decomposing type crystalline olefin resin may be kneaded at high temperature, and a crosslinking agent usually used for vulcanization of the rubber may also be used as the crosslinking agent. Preferably, publicly known methods such as a method of using peroxide, electron beam irradiation, sulfur vulcanization and silane crosslinking may be used. Furthermore, as a phenol resin, it is possible to use bromide of alkylphenol resin, curing agents such as mixed crosslinking agents containing a halogen donor such as tin chloride and chloroprene, and alkylphenol resin. In these methods of giving the branches, the method of using peroxide and the electron beam irradiation are desirable because they are easily controlled.

Specific examples of the above peroxide preferably used may include dicumylperoxide, di-tert-butyl peroxide, 2,5-dimethyl-2,5-di(tert-butylperoxy)hexane, 2,5-dimethyl-2,5-di(tert-butylperoxy)hexine-3, 1,3-bis(tert-butylperoxyisopropy)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxy benzoate, tert-butyl perbenzoate, tert-butylperoxyisopropyl carbonate, diacetyl peroxide, lauroyl peroxide and tert-butylcumyl peroxide.

Among these peroxides, 2,5-dimethyl-2,5-di(tert-butylperoxy)hexane, 2,5-dimethyl-2,5-di(tert-butylperoxy)hexine-3, 1,3-bis(tert-butylperoxyisopropy)benzene, 1,1-bis(tert-butylperoxy)-3,3, 5-trimethylcyclohexane and n-butyl-4,4-bis(tert-butylperoxy)valerate are preferable in terms of odor and scorch stability, and among others, 1,3-bis(tert-butylperoxyisopropy)benzene is the most preferable.

It is preferable that this peroxide is typically combined at about 0.01 to 2.5 parts by weight based on total 100 parts by weight of the unfoamed foaming resin substrate. The actual combined amount is adjusted in consideration of balance of bubble diameters, the gel fraction and the density of the foam.

In the present invention, when the branches are given by treating with the above peroxide, as an auxiliary agent of the treatment, peroxy crosslinking aids such as sulfur, p-quinonedioxime, p, p'-benzoyl quinonedioxime, N-methyl-N-4-dinitrosoaniline, nitrosobenzene, diphenylguanidine and N, N'-m-phenylenedimaleimide, or divinylbenzene, triallyl cyanurate, polyfunctional methacrylate monomer such as ethylene glycol dimethacrylate, trimethylolpropane trimethacrylate and acryl methacrylate, and polyfunctional vinyl monomer such as vinyl butyrate and vinyl stearate may be combined.

The fluidity and the foamability of the foaming substrate resin may be adjusted optionally also by the combined amount of these auxiliary agents.
But when branching and partial crosslinking of the resin is performed by irradiation of ionizing radiation such as electron beam, neutron, α-ray, β-ray, γ-ray, X-ray and ultraviolet ray, the crosslinking agent need not be combined, but when branching and partial crosslinking is performed by the irradiation of the ionizing radiation, divinylbenzene, triallyl cyanurate, polyfunctional methacrylate monomer such as ethylene glycol dimethacrylate, trimethylolpropane trimethacrylate and acryl methacrylate, and polyfunctional vinyl monomer such as vinyl butyrate and vinyl stearate may be combined as the auxiliary agent.

When the olefin based thermoplastic elastomer composition for foam molding of the present invention has the gel fraction of less than 5%, simultaneously the organic peroxide crosslinking type olefin based copolymer rubber (A) and the organic peroxide decomposing type crystalline olefin resin (B) is configured by (A) + (B) = 100 parts by weight, and the rubbery olefin based soft resin (C) obtained by the kneading and reacting (A) and (B) has the higher viscosity than that in a rubbery olefin based soft resin (D) obtained by kneading and not reacting (A) and (B), then the foaming magnification is enhanced, which is preferable.

The viscosity referred to in the present invention is a fluid viscosity (poise) at 200°C measured using a flow tester (FT500) supplied from Shimadzu Corporation when the resin filled in a cylinder at a constant load of 20 kg at a heating rate of 5°C/minute is run from a nozzle.

When the viscosity of this olefin based thermoplastic elastomer composition corresponds to the gel fraction of less than 5% and simultaneously has the higher value compared with the composition obtained by simply kneading, this composition has the branches suitable for accomplishing high foaming and good molding.

By preparing the composition using the aforementioned "gel fraction" as the indicator, the high foaming and the good molding are realized. Besides in the present invention, the other indicator has been established, and it is the above "mobility bounding 400 microseconds at the T₂ time by the proton (H⁺) pulse nuclear magnetic resonance". This indicator is different from the gel fraction in that this indicator can be used for not only the indicator when the composition is prepared but also the evaluation whether the molded foam is produced as designed.

### (Mobility bounding 400 microseconds at T₂ time by proton (H⁺) pulse nuclear magnetic resonance)

As described above, when the viscosity of the resin composition becomes high, the foamability is suppressed whereas when the viscosity is not higher than the viscosity before the kneading reaction, it is difficult to keep the foaming itself. Thus, the appropriate viscosity is required, and it has been found that this viscosity is in proportion to the degree of the branches in the resin composition. One of the indicators which indicate this degree of the branches is the aforementioned "gel fraction".

The "mobility" is obviously different molecular-dynamically in a top portion and a base portion of this branch. According to the study by the present inventors, it has been found that the T₂ (spin-spin relaxation) time under the proton (H⁺) pulse nuclear magnetic resonance is different in the base portion and the top portion in the above branch, the mobility is low and the T₂ time is 400 microseconds or more in the branch base portion whereas the mobility is high and the T₂ time is less than 400 microseconds in the branch top portion. The branch percentage corresponding to the above "suitable range of the gel fraction" was obtained using this T₂ time, and consequently it was identified that the volume ratio of the "component having the mobility with T₂ time of less than 400 microseconds" in the resin composition was 5 to 45%.

As described above, the organic peroxide crosslinking type olefin based copolymer rubber (A) can be present in the branched state and does not interfere with the fluidity and the foamability upon injection in the unfoamed olefin based thermoplastic elastomer for foam molding composed of the mixture of the organic peroxide crosslinking type olefin based copolymer rubber (A) and the organic peroxide decomposing type crystalline olefin resin (B).

At that time, as a volume fraction of a crystal component and an amorphous branched component, it is required that the volume fraction of the component having the mobility with T₂ (spin-spin relaxation) time of less than 400 microseconds by the proton (H⁺) pulse nuclear magnetic resonance at room temperature (20 to 30°C) is 5 to 45%. The T₂ (spin-spin relaxation) time by the H⁺ pulse nuclear magnetic resonance is obtained by monitoring the time in the case of using a solid echo method for a pulse mode using JNM-MU24A supplied from JEOL (Japan Electron Optics Laboratory) Ltd.

When the volume fraction of the component having the mobility with T₂ (spin-spin relaxation) time of less than 400 microseconds is 5 to 45%, the fluidity upon injection is excellent, the foaming magnification is also high and the foam molding in molds and dies becomes easy. To obtain such effects, the volume fraction of the component having the mobility with T₂ time of less than 400 microseconds is preferably 5 to 35%. This more suitable volume fraction is also associated with the range of the composition ratios between "the more preferable combined amount of less than 40 parts by weight" and "the particularly preferable combined amount of 5 to 35 parts by weight of the aforementioned organic peroxide decomposing type crystalline olefin resin (B) and the branched state of the organic peroxide crosslinking type olefin copolymer rubber (A).

When the volume fraction of the component having the mobility with T₂ (spin-spin relaxation) time of 400 microseconds or more is 55 to 95%, that case is especially preferable because the fluidity upon injection is excellent, the foaming magnification is also high and the foam molding in molds and dies becomes easy.

In order to realize the "molecular mobility suitable for the injection" that the volume fraction of the component having the mobility with T₂ (spin-spin relaxation) time of 400 microseconds or more is 55 to 95%, the publicly known method such as method of using peroxide, electron beam irradiation, sulfur vulcanization and silane crosslinking is used and the appropriate branches are given to the olefin based thermoplastic elastomer composition for foaming as described in the above case of controlling by the "gel fraction". In these methods, the method of using peroxide and the electron beam irradiation are desirable because they are easily controlled.

### (Other additives)

In the foaming substrate resin used in the present invention, additionally additives such as various weather resistant stabilizers, heat resistant stabilizers, plasticizers, flame retardants, thickeners, lubricants and coloring agents usually used for olefin based thermoplastic resins and thermoplastic elastomer compositions may be added in the ranges in which the object of the present invention is not impaired.

Specific examples of fillers which may be additionally combined in the olefin based thermoplastic elastomer for foam molding may include organic filler materials such as carbon black, nitroso pigment, colcothar, phthalocyanine pigment, pulp, fibrous chips and agar, and inorganic fillers such as clay, kaolin, silica, diatomaceous earth, aluminium hydroxide, zinc oxide, magnesium hydroxide, calcium oxide, magnesium oxide, titanium oxide, mica, bentonite, shirasu balloon, zeolite, silicate white earth, cement and silica fume.

As the method for kneading the above composition, the method of kneading using a publicly known kneader such as a V type brabender, a tumbler mixer, a ribbon brabender and a Henschel mixer, and kneading and dispersing this kneaded one using a publicly known kneader such as an open type mixing roll or a non-open type Banbury mixer, extruder kneader or continuous mixer may be preferably used.

A branching reaction may be given to the composition during a kneading step in this way, or the composition may be kneaded not to give the branching reaction and the branching reaction may be statically given by heating this kneaded one in an oven or a heat press apparatus.

It is desirable that the unfoamed olefin based thermoplastic elastomer composition for foam molding prepared by these methods is used by making into a pellet shape using a publicly known pelletizer.

### (Foamable resin and foam)

In the present invention, an unfoamed foamable master batch may also be prepared by kneading a thermally decomposing type foaming agent in the olefin based thermoplastic elastomer composition for foam molding at a temperature equal to or less than a decomposition temperature of the foaming agent.

For example, the olefin based thermoplastic elastomer composition for foam molding and the foaming agent are kneaded using the publicly known kneader such as V type brabender, a tumbler mixer, a ribbon brabender and a Henschel mixer, and if kneading is further required, they are prepared by subsequently kneading using an extruder, the mixing roll, kneader or the Banbury mixer at the temperature at which the thermal decomposing type foaming agent is not decomposed.

The foaming agent is typically used at a ratio of 1 to 25 parts by weight based on 100 parts by weight of the unfoamed foaming substrate resin.

It is desirable that the master batch of the unfoamed olefin based thermoplastic elastomer composition prepared in this way is used by making into the pellet shape by the publicly known pelletizer.

The aforementioned foaming agent combined with the olefin based foaming resin substrate is the thermally decomposing type foaming agent which thermally decomposes to generate a gas. Specific examples of such a foaming agent may include organic foaming agents such as azodicarbonamide (ADCA), diethyl azocarboxylate, barium azodicarboxylate, 4,4-oxybis(benzenesulfonylhydrazide), 3,3-disulfonhydrazidephenyl sulfonic acid, N,N'-dinitrosopentatetramine, p-toluenesulfonylhydrazide and trihydrazinotriazine, and inorganic foaming agents such as sodium hydrogen carbonate, ammonium hydrogen carbonate and ammonium carbonate. In particular, azodicarbonamide (ADCA), N,N'-dinitrosopentatetramine and trihydrazinotriazine are preferable as the organic foaming agent, and sodium hydrogen carbonate is preferable as the inorganic foaming agent. Sodium hydrogen carbonate, monosodium citrate and glycerine fatty acid ester may also be mixed and used.
These foaming agents may be used alone or in combination of two or more, or in combination with a so-called decomposition aid.

The additives such as foaming aids, wetting agents, weather resistant stabilizers, anti-aging agents and coloring agents as well as the filler are combined at any stage of the above kneading.

An amorphous olefin rubber or a crystalline olefin resin may be further combined and mixed as a resin raw material in addition to the foamable master batch composed of the olefin based thermoplastic elastomer for foam molding upon injection or extrusion molding.

Specific examples of the amorphous olefin rubber may include ethylene α-olefin copolymer rubber [ethylene/α-olefin (molar ratio) = about 90/10 to 50/50], ethylene α-olefin non-conjugated diene copolymer rubber [ethylene/α-olefin (molar ratio) = about 90/10 to 50/50], propylene α-olefin copolymer rubber [propylene/α-olefin (molar ratio) = about 90/10 to 50/50] and butene α-olefin copolymer rubber [butene/α-olefin (molar ratio) = about 90/10 to 50/50].
Specific examples of the above α-olefin may include ethylene, propylene, 1-butene, 1-pentene, 4-methyl-1-pentene, 1-hexene, 1-octene, 1-nonene, 1-decene, 1-undecene, 1-dodecene, 1-tridecene, 1-tetradecene, 1-pantadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and combinations thereof.

Specific examples of the above crystalline olefin resin may include a random copolymer of propylene with 10 mol% or less of the other α-olefin, a block copolymer of propylene with 30 mol% or less of the other α-olefin, 1-butene homopolymer, a random copolymer of 1-butene homopolymer with 10 mol% or less of the other α-olefin, 4-methyl-1-pentene homopolymer, and a random copolymer of 4-methyl-1-pentene with 20 mol% or less of the other α-olefin.

In the present invention, the resin may also be foamed by a volatile solvent or water in place of the thermally decomposing type foaming agent.
Alternatively, the gas itself may also be dispersed or impregnated in the foaming resin substrate, and in this case, the foaming agent may include carbon dioxide gas and nitrogen gas.
Specifically, carbon dioxide or nitrogen or vapor of the volatile solvent or water is infused and kneaded to disperse before sending out the foaming substrate resin from a molding machine upon extrusion or stamping molding or extrusion molding.
A condition for infusing and kneading these foaming agents before the injection or the extrusion may be either a supercritical state or a non-supercritical state.

After the foaming agent is kneaded and dispersed before the injection or the extrusion, the foamable olefin based thermoplastic elastomer is passed through a nozzle and foam-molded in molds or dies.

In the injection molding, the foamable olefin based thermoplastic elastomer injected through the nozzle can be molded by a publicly known mold operation. That is, the injection molding, or the stamping molding or core back molding is possible in closed type molds.

### EFFECT OF THE INVENTION

The resin composition for the foam of the present invention is composed of the branched rubbery olefin based soft resin (C) obtained by kneading and reacting to thicken the organic peroxide crosslinking type olefin based copolymer rubber (A) and the organic peroxide decomposing type crystalline olefin resin (B), whose gel fraction (weight percentage of the insoluble content after extraction with xylene boiled at 138°C for 3 hours) is less than 5%. The high foaming magnification may be exerted and the foam which is light and excellent in soft cushion property and thermal insulating property may be obtained by specifying the above gel fraction.

Alternatively, the resin composition for the foam of the present invention is composed of the branched rubbery olefin based soft resin (C) obtained by kneading and reacting to thicken the organic peroxide crosslinking type olefin based copolymer rubber (A) and the organic peroxide decomposing type crystalline olefin resin (B), in which the volume ratio of the component which exhibits the mobility of 400 microseconds or more at the T₂ (spin-spin relaxation) time by proton (H⁺) pulse nuclear magnetic resonance is 55 to 95% and the volume ratio of the component which exhibits the mobility of less than 400 microseconds at the same T₂ time is 5 to 45%. The high foaming magnification may be exerted and the foam which is light and excellent in soft cushion property and thermal insulating property may be obtained by specifying the volume ratios of the components which exhibit less then 400 microseconds and 400 microseconds or more at the above T₂ time.

Therefore, according to the present invention, it becomes possible to provide foam molded articles which can be used for interior parts for automobiles, have high to low foaming magnifications and recycling property, and are soft and excellent in cushion property, thermal insulating property and in-mold foam molding property in the injection molding, the press molding, the transfer molding and the stamping molding.

### BEST MODE(S) FOR CARRYING OUT THE INVENTION

The present invention will be described in more detail below by Examples, but the following Examples are only exemplifications for suitably illustrating the invention and do not limit the invention.

### Examples

An injection molding machine used for molding the foams of the present invention was an apparatus having a mold clamping force of 450 ton, a plasticizing capacity of 197 kg/h, a screw diameter of 58 mm, a maximum injection pressure of 216 MPa and a maximum injection rate of 528 cm³/s. A core back molding method was practically applied.

Likewise, a mold used for molding the foams of the present invention was an office receiving box with A4 size having a thickness of 4 mm.

### (Example 1)

An olefin based thermoplastic elastomer for foaming [(i) gel fraction: 3.2% by weight, (ii) a volume ratio of a component having a mobility of less than 400 microseconds at a T₂ (spin-spin relaxation) time was 39%) was obtained by kneading 65 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 35 parts by weight of polypropylene [PP; propylene content 100%, MFR (ASTM 1238, 190°C, 2.16 kg load) 5.0/10 minutes] in the presence of 0.15 part by weight of 2,5-dimethyl-2,5-di(tert-dibutylperoxy)hexine-3 [peroxide] and 0.2 parts by weight of trimethylolpropane trimethacrylate [auxiliary agent] at 165°C. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 230°C, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, a foaming magnification of the molded article was 4.1 times (foaming magnification: specific gravity after foaming/specific gravity before foaming), a molded shape was good, and a feel was also good (Asker C hardness: 22).

### (Example 2)

An olefin based thermoplastic elastomer for foaming [(i) gel fraction: 4.8% by weight, (ii) the volume ratio of the component having the mobility of less than 400 microseconds at the T₂ (spin-spin relaxation) time was 30%) was obtained by kneading 75 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.15 part by weight of 2,5-dimethyl-2,5-di(tert-dibutylperoxy)hexine-3 [peroxide] and 0.25 parts by weight of trimethylolpropane trimethacrylate [auxiliary agent] at 165°C. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 230°C, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 4.6 times (foaming magnification: specific gravity after foaming/specific gravity before foaming), the molded shape was also good, and the feel was also good (Asker C hardness: 21).

### (Example 3)

An olefin based thermoplastic elastomer for foaming [(i) gel fraction: 4.1% by weight, (ii) the volume ratio of the component having the mobility of less than 400 microseconds at the T₂ (spin-spin relaxation) time was 29%) was obtained by kneading 75 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.15 part by weight of 2,5-dimethyl-2,5-di(tert-dibutylperoxy)hexine-3 [peroxide] and 0.20 parts by weight of trimethylolpropane trimethacrylate [auxiliary agent] at 165°C. In a cylinder at 230°C, 0.3% by weight of nitrogen gas was melted and dispersed for 100 parts by weight of the resulting foamable olefin based thermoplastic elastomer for foaming, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 4.2 times (foaming magnification: specific gravity after foaming/specific gravity before foaming), the molded shape was also good, and the feel was also good (Asker C hardness: 22).

### (Example 4)

An olefin based thermoplastic elastomer for foaming [(i) gel fraction: 4.9% by weight, (ii) the volume ratio of the component having the mobility of less than 400 microseconds at the T₂ (spin-spin relaxation) time was 40%) was obtained by kneading 75 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.2 part by weight of 2,5-dimethyl-2,5-di(tert-dibutylperoxy)hexine-3 [peroxide] and 0.25 parts by weight of trimethylolpropane trimethacrylate [auxiliary agent] at 165°C. In a cylinder at 230°C, 0.3% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 3.2 times (foaming magnification: specific gravity after foaming/specific gravity before foaming), the molded shape was also good, and the feel was also good (Asker C hardness: 35).

### (Example 5)

An olefin based thermoplastic elastomer for foaming [(i) gel fraction: 4.8% by weight, (ii) the volume ratio of the component having the mobility of less than 400 microseconds at the T₂ (spin-spin relaxation) time was 30%) was obtained by kneading 75 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.3 part by weight of 2,5-dimethyl-2,5-di(tert-dibutylperoxy)hexine-3 [peroxide] and 0.45 parts by weight of trimethylolpropane trimethacrylate [auxiliary agent] at 165°C. In a cylinder at 230°C, 0.1% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 2.3 times (foaming magnification: specific gravity after foaming/specific gravity before foaming), the molded shape was also good, and the feel was also good (Asker C hardness: 38).

### (Comparative Example 1)

An olefin based thermoplastic elastomer for foaming [(i) gel fraction: 8% by weight, (ii) the volume ratio of the component having the mobility of less than 400 microseconds at the T₂ (spin-spin relaxation) time was 50%) was obtained by kneading 65 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 35 parts by weight of polypropylene [PP; propylene content 100%, MFR (ASTM 1238, 190°C, 2.16 kg load) 5.0/10 minutes] in the presence of 0.4 part by weight of 2,5-dimethyl-2,5-di(tert-dibutylperoxy)hexine-3 [peroxide] and 0.2 parts by weight of trimethylolpropane trimethacrylate [auxiliary agent] at 165°C. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 230°C, and then was injected in a mold closed and formed from upper and lower molds (injection condition: injection rate 200 mm/s, mold temperature 30°C).

The obtained olefin based thermoplastic elastomer foam molded article was removed, consequently, the molded shape was good, but the foaming magnification was 2.3 times (foaming magnification: specific gravity after foaming/specific gravity before foaming), and the feeling was rigid and not good (Asker C hardness: 35).

### (Comparative Example 2)

An olefin based thermoplastic elastomer for foaming [(i) gel fraction: 45% by weight, (ii) the volume ratio of the component having the mobility of less than 400 microseconds at the T₂ (spin-spin relaxation) time was 72%) was obtained by kneading 80 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 20 parts by weight of polypropylene [PP; propylene content 100%, MFR (ASTM 1238, 190°C, 2.16 kg load) 5.0/10 minutes] in the presence of 0.5 part by weight of 2,5-dimethyl-2,5-di(tert-dibutylperoxy)hexine-3 [peroxide] and 0.2 parts by weight of trimethylolpropane trimethacrylate [auxiliary agent] at 165°C. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 230°C, and then was injected in a mold closed and formed from upper and lower molds (injection condition: injection rate 200 mm/s, mold temperature 30°C).

The obtained olefin based thermoplastic elastomer foam molded article was removed, consequently, the molded shape was bad, the foaming magnification was 2.0 times (foaming magnification: specific gravity after foaming/specific gravity before foaming), and the feeling was rigid and not good (Asker C hardness: 51).

### (Comparative Example 3)

An olefin based thermoplastic elastomer for foaming [(i) gel fraction: 70% by weight, (ii) the volume ratio of the component having the mobility of less than 400 microseconds at the T₂ (spin-spin relaxation) time was 90%) was obtained by kneading 75 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.7 part by weight of 2,5-dimethyl-2,5-di(tert-dibutylperoxy)hexine-3 [peroxide] and 0.3 parts by weight of trimethylolpropane trimethacrylate [auxiliary agent] at 165°C. In a cylinder at 230°C, 0.3% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 1.3 times (foaming magnification: specific gravity after foaming/specific gravity before foaming), the molded shape was good but the feeling was very rigid (Asker C hardness: 65). The constitution fractions of raw materials were exactly the same as those in Example 4, but the gel fraction became high, 48% because an amount of added peroxide was large, and the foaming magnification was lowered as well as the flexibility was poor to become rigid because harsh shearing and thermal history were given to the raw materials until being finally formed and the microaggregation structure was reversed to change the continuous phase to the crystal phase.

### (Comparative Example 4)

An olefin based thermoplastic elastomer for foaming [(i) gel fraction: 49% by weight, (ii) the volume ratio of the component having the mobility of less than 400 microseconds at the T₂ (spin-spin relaxation) time was 85%) was obtained by kneading 75 parts by weight of ethylenepropylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 2.2 part by weight of 2,5-dimethyl-2,5-di(tert-dibutylperoxy)hexine-3 [peroxide] and 2.2 parts by weight of trimethylolpropane trimethacrylate [auxiliary agent] at 165°C. In a cylinder at 230°C, 0.3% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 1.2 times (foaming magnification: specific gravity after foaming/specific gravity before foaming), the molded shape was good but the feeling was very rigid (Asker C hardness: 50).

### INDUSTRIAL APPLICABILITY

As in the above, according to "the resin composition for foam molding, the foam and the method for producing the foam" of the present invention, it becomes possible to provide the foam molded articles which can be used for interior parts for automobiles, have the highly flexible foaming magnifications and the recycling property, and are soft and excellent in cushion property, thermal insulating property and in-mold foam molding property.

## Claims

1. A resin composition for a foam comprising:
a branched rubbery olefin based soft resin (C) obtained by a kneading reaction of an organic peroxide crosslinking type olefin based copolymer rubber (A) and an organic peroxide decomposing type crystalline olefin resin (B),
wherein a gel fraction (a weight percentage of an insoluble content after extraction with xylene boiled at 138°C for 3 hours) of the branched rubbery olefin based soft resin (C) is less than 5%.

2. The resin composition for the foam according to claim 1, wherein a volume ratio of a component which exhibits a mobility of 400 microseconds or more at a T₂ (spin-spin relaxation) time by proton (H⁺) pulse nuclear magnetic resonance is 55 to 95% and a volume ratio of a component which exhibits the mobility of less than 400 microseconds at the T₂ time is 5 to 45% in the branched rubbery olefin based soft resin (C).

3. A foam obtained by foaming a branched rubbery olefin based soft resin (C) obtained by a kneading reaction of an organic peroxide crosslinking type olefin based copolymer rubber (A) and an organic peroxide decomposing type crystalline olefin resin (B),
wherein a gel fraction (a weight percentage of an insoluble content after extraction with xylene boiled at 138°C for 3 hours) of the branched rubbery olefin based soft resin (C) is less than 5%.

4. The foam according to claim 3, wherein a volume ratio of a component which exhibits a mobility of 400 microseconds or more at a T₂ (spin-spin relaxation) time by proton (H⁺) pulse nuclear magnetic resonance is 30 to 95% and a volume ratio of a component which exhibits the mobility of less than 400 microseconds at the T₂ time is 5 to 70% in the branched rubbery olefin based soft resin (C).

5. A method for producing a foam comprising:
a step of preparing a branched rubbery olefin based soft resin (C) wherein its gel fraction (a weight percentage of an insoluble content after extraction with xylene boiled at 138°C for 3 hours) is less than 5%, by kneading and reacting to thicken an organic peroxide crosslinking type olefin based copolymer rubber (A) and an organic peroxide decomposing type crystalline olefin resin (B) in the presence of an organic peroxide; and
a step of foaming the branched rubbery olefin based soft resin (C).

6. A method for producing a foam comprising:
a step of preparing a branched rubbery olefin based soft resin (C) wherein a volume ratio of a component which exhibits a mobility of 400 microseconds or more at a T₂ (spin-spin relaxation) time by proton (H⁺) pulse nuclear magnetic resonance is 30 to 95% and a volume ratio of a component which exhibits the mobility of less than 400 microseconds at the T₂ time is 5 to 70%, by kneading and reacting to thicken an organic peroxide crosslinking type olefin based copolymer rubber (A) and an organic peroxide decomposing type crystalline olefin resin (B) in the presence of an organic peroxide; and
a step of foaming the branched rubbery olefin based soft resin (C).
